## Europäisches Patentamt
## European Patent Office
## Office européen des brevets

(19)

(11) Publication number: **0 008 806**
**B1**

## EUROPEAN PATENT SPECIFICATION

(12)

(45) Date of publication of patent specification: **13.07.83**

(21) Application number: **79103373.1**

(22) Date of filing: **10.09.79**

(51) Int. Cl.³: **B 65 G 43/02,**
**B 29 D 29/00,**
**B 65 G 15/32, H 01 B 5/14**

(54) Conveyor belt incorporating an electrically conductive fabric.

(30) Priority: **13.09.78 US 941871**

(43) Date of publication of application:
**19.03.80 Bulletin 80/6**

(45) Publication of the grant of the patent:
**13.07.83 Bulletin 83/28**

(84) Designated Contracting States:
**DE FR GB IT SE**

(56) References cited:
**AU - B - 442 872**
**DE - A - 2 018 986**
**DE - A - 2 107 732**
**DE - A - 2 225 774**
**DE - B - 1 940 945**
**GB - A - 1 319 588**
**GB - A - 1 329 294**
**US - A - 2 793 150**
**US - A - 3 288 175**
**US - A - 3 731 786**
**US - A - 3 792 459**

(73) Proprietor: **The B.F. GOODRICH Company**
**Dept. 0015 WHB-6 500 South Main Street**
**Akron, Ohio 44318 (US)**

(72) Inventor: **Blalock, Gary Lunsford**
**11723 Tritts Street**
**Canal Fulton, Ohio 44614 (US)**

(74) Representative: **von Kreisler, Alek, Dipl.-Chem.**
**et al,**
**Deichmannhaus am Hauptbahnhof**
**D-5000 Köln 1 (DE)**

### Conveyor belt incorporating an electrically conductive fabric

Background of the Invention

In long endless conveyor belts of the type having an electrically insulating body used to convey bulk material, there is a possibility of encountering a rip in the belt. This may occur, for example, by sharp objects being dropped thereon at a loading station. It is desirable to promptly detect such longitudinal rips and, preferably, shut down and repair the conveyor belt upon such detection, thereby minimizing damage to the belt.

In prior art structures as described, for example, in U.S. Patent No. 3,792,459 issued to Frank D. Snyder, there is disclosed a conveyor belt rip detector system of the type in which the present invention may be employed. In such a rip detector system, a plurality of equally spaced antennae are imbedded transversely at spaced-apart locations in the belt so as to periodically couple an electrical signal from a transmitter probe to a receiver probe while the belt, with its respective antennae, moves past the electrical sensor probes. The detected electrical signals may thus function to monitor the performance of the belt and shut down the system in response to a break in an antenna which would be indicative of a longitudinal rip in the belt. Detection of the break will permit correction before the break or rip gets too long and seriously destroys the entirety of the belt or before the belt assembly ceases to function properly. A failure, noted timely, can be corrected with minimum cost and inconvenience.

In the prior art devices it has been the general practise to utilize conveyor belts having embedded therein a reinforcement (US—A—2 793 150) made of metallic screens or wires such as steel extending transversely across the widths of the belt, at equally spaced apart distances. Such wires may be used as antennae as disclosed in US—A—3 792 459. Such wires function properly during normal operations for a period of time. Unfortunately, however, due to the movement of the belt and wires around the conveyor rollers of the system, continued flexing stresses upon the antenna wires may cause premature breakage of the wires, thus causing a malfunction in the system. Metallic wires are also susceptible of breakage caused by ore dropped on the belt at a loading station. A broken antenna, caused by failure of any nature, will undesirably give the appearance to the control system that there is a rip in the belt. The system could then improperly shut down the conveying system when in fact there is no such rip in the belt. Alternate programming of the control system may also be employed.

Summary of the Invention

The present invention relates to a flexible conveyor belt formed of an elastomeric material and having formed therein a plurality of rip detecting antennae spaced along the length of the belt with each antenna extending substantially from edge to edge across the width of the belt, characterized by each antenna being formed of flexible electrically conductive fabric constructed of yarns, said yarns being made up of strands twisted along their lengths, said strands being formed of an electrically non-conductive material continuously pre-coated with electrically conductive particles to thereby form a continuous, electrically conductive path substantially across the width of the belt at spaced apart locations for rip detecting capabilities, said yarns being coupled together in an open mesh configuration to form interstices therebetween, whereby the elastomeric material of said belt surround said yarns on both sides of said yarns and through the interstices therebetween to hold the fabric fixedly positioned in its open mesh configuration within said belt. Such a system does not suffer from premature breakage of the antennae which would cause the loss of electrical conductivity between the probes of the control system.

In order to gain a better understanding of the invention as well as other advantages and further features thereof, reference is made to the following detailed description of the invention to be read in conjunction with the accompanying drawings forming part of this application.

Brief Description of the Drawings

Figure 1 is a schematic side elevational view of a conveyor assembly and control system adapted to utilize antennae constructed of the fabric of the instant invention;

Figure 2 is a schematic sectional view of the assembly of Figure 1 taken through the belt, fabric antenna, sensor probes, and control circuitry;

Figure 3 is a perspective view of the belt of Figures 1 and 2 with layers removed to show internal construction, including a fabric antenna;

Figure 4 is an enlarged view of a fabric antenna of Figures 2 and 3;

Figure 5 is a sectional view of an alternative belt assembly employing the fabric antennae of the present invention.

Description of the Preferred Embodiment

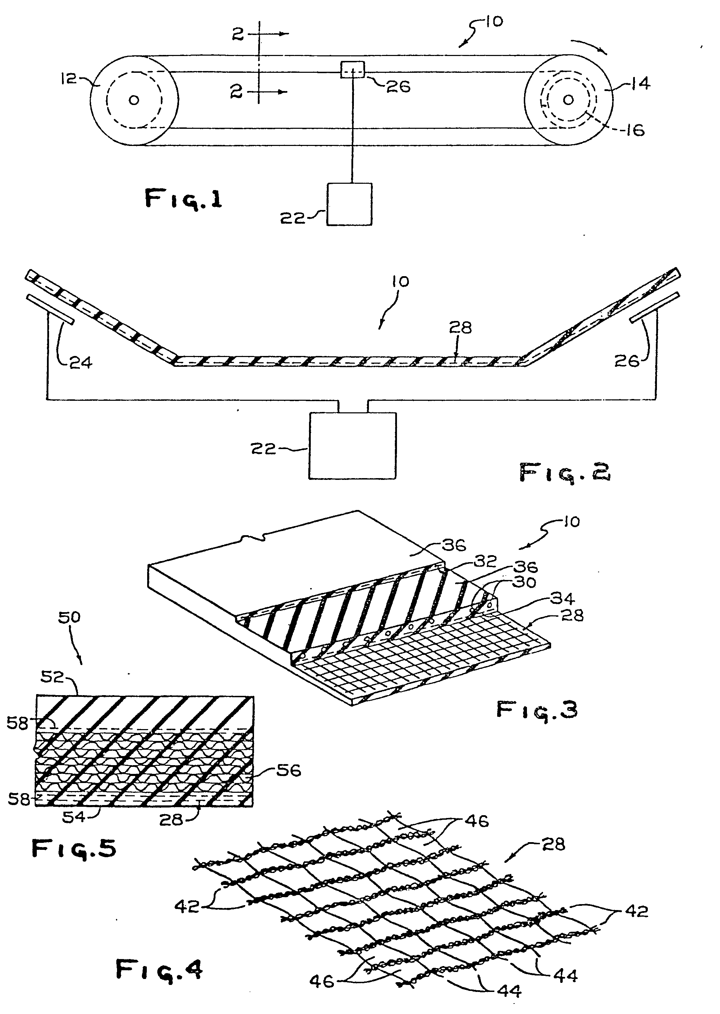

As shown in the figures, with particular reference to Figure 1, there is shown a conveyor belt assembly constructed to utilize the antennae made of the fabric of the present invention. The conveyor belt, generally designated as 10, is trained around a plurality of rollers 12 and 14 powered by a drive source, or motor 16, to move the belt in a continuous cycle of operation. The belt has an upper surface for conveying ore or other material between a loading station and a discharge station. Opposite the upper surface is a return surface. The edges of the belt are preferably turned up slightly at their edges at least along the upper surface to minimize slippage of conveyed ore therefrom. The belt is schematically shown as travelling over a short distance between two rollers. It should be understood that belts of this type are readily adapted for conveying ore over great distances including many hundreds or thousands of yards. Further, only two rollers, 12 and 14, are shown for illustrative purposes. Many rollers could be suitably utilized to permit conveying of materials great distances, up extended heights and even around corners.

Utilized in conjunction with the conveyor belt 10 and drive source 16 is a control mechanism of assembly 22 including electrical sensors or probes 24 and 26 fixedly positioned adjacent and upper surface of the belt. The probes are located adjacent opposite edges of the belt and are adapted to monitor its movement and feed intelligence to the control mechanism 22. This in turn is adapted to act in a servoloop configuration, through appropriate circuitry, back to motor 16. In this manner, the motive force to the belt may be terminated in response to a rip in any antenna 28 which is fixedly mounted within the belt for movement therewith.

In the preferred mode, a plurality of antennae are adapted to be located at fixed, evenly spaced intervals within the belt. These antennae could be spaced at ten, twenty, or fifty feet or more or less but generally as a function of the belt size and speed and the control program utilized. They may thus be utilized to detect the presence and movement of unbroken antennae within the belt as they move past sensors 24 and 26. A more complete understanding of the belt assembly and control system can be had by reference to the aforementioned patent to Snyder.

Shown in Figures 3 and 4 is the preferred fabric for use as an antenna constructed in accordance with the present invention. The preferred antenna is shown in a conveyor belt wherein it may be beneficially utilized. The belt 10 as shown particularly in Figure 3 includes steel cables 30 which prevent the belt from stretching in the direction of belt movement and which provide great strength to the belt. The cables also prevent the belt from tearing across its width. Reinforcement in both the length and width of the belt is provided by fabric sheets or breakers 32 and 34 on opposite sides of the centrally located cables 30. Various layers of vulcanized elastomeric material such as rubber 36, natrual or synthetic combinations thereof blended for belting purposes, are located on opposite sides of the cables 30 and sheets 32 and 34. The cables, sheets and rubber all run in the continuous loop configuration for carrying out the conveying function.

While the belt in Figure 3 has breakers top and bottom, the invention will function equally as well without such sheets or breakers 32 and 34.

An alternate belt construction employing the antennae of the instant invention is shown in Figure 5. The belt 50 has rubber upper and lower cover layers 52 and 54 on opposite faces. Rubberized fabric layers 56 are located between the cover layers with fabric sheets or breakers 58 located at the interfaces between the rubberized fabric layers and cover layers. The breakers are constructed of a fabric material and aid in bonding the carcass layers to the cover layers. They also add impact resistance to the belt. The fabric antennae 28 are located within the lower cover layer 54. The breakers, covers, and fabric carcass extend continuously along the length of the endless belt. The antennae are evenly spaced along the length of the belt and function in the manner of the aforementioned belt.

It should be understood, however, that the antennae of the present invention can function equally well in any belt assembly with or without cables or with or without breakers or with or without fabric carcass plies.

Located between layers of the rubber are segments of the fabric 28 which function as the rip detecting antennae. The rubber is a vulcanizable elastomeric material so that during the vulcanizing of the belt, the rubber will flow through interstices of the fabric, surrounding each of the yarns and become part of the fabric holding the individual yarns in their proper, spaced orientations.

Extending transverse to the direction of belt motion are the warp yarns 42, constructed of an electrically insulating material, preferably monofilament polymer strands such as polyamide known as nylon. The strands are first suffused or otherwise coated or impregnated with electrically conductive parts or particles such as carbon.

In fabricating the electrically conductive monofilament strands for a preferable construction to carry out the present invention, a polymer monofilament strands at about 20 denier per filament are first treated. This is done by first moving them through an acid bath which will dissolve the surface area somewhat. While the surface is still in a tacky state, the monofilament strands are then moved through a second bath containing a mixture of carbon and polymer, preferably the same polymer as the original monofilament strands. The speed of motion through this second bath should be sufficient to permit the tacky surface to pick up an added 5% by weight of the contents of the bath. This will raise the monofilament strands from an initial 20 denier per filament to about 21. This second bath contains a slurry of electrically conductive material such as carbon intermixed with the polymer in a liquid state to effect the desired coatings. After movement through the second bath, the monofilament strands will then be dried to create new, completely fused monofilament strands having an electrically conductive surface due to the presence of the carbon particles. These new monofilament strands will preclude removal of the conductive segments during normal flexing, handling, or other manipulation. While many polymers may be utilized, polyamide, known as nylon, is preferred.

A plurality of these strands are preferably twisted along their lengths for added strength to constitute the warp yarns which are then woven with the weft or filler yarns 44. The weft or filler yarns are likewise made up of nylon strands suffused with carbon, a group of which strands are twisted to constitute the weft or filler yarns. The warp and filler yarns are then woven in an open mesh configuration as through a leno weave. By a leno weave is meant a weave in which the warp lines are arranged in pairs with one twisted around the other between picks of filler or weft yarn as in a marquisette. This type of weave gives firmness and strength to an open weave fabric and prevents slippage and displacement of the warp and filler yarns with respect to each other. In this manner large interstices 46 can be created in the fabric and held there until utilization of the fabric as between the elastomeric layers of the belt during the vulcanization process.

A material for use as the strands to be twisted to constitute the individual yarns of the fabric of instant invention is commercially available from various sources. Known applications, however, generally employ such strands in combination with conventional nonconductive strands for the elimination or dissipation of static electricity. The electrical nature of such known fabrics are thus insufficiently conductive for the present purposes of functioning as an active electrical element in a circuit electrically coupling spaced probes.

The warp yarns extending in one dimension, across the width of the conveyor belt, must be electrically conductive for proper functioning as a controlling antenna in the circuitry. The filler yarns need not necessarily be electrically conductive but such is preferred since they may assist in generating an electrical grid in both directions of the fabric to extend the conductivity of each antenna.

During the vulcanization process of the belt laminate, the elastomeric rubber on opposite sides of the fabric flow through the interstices to hold the warp and filler yarns at the proper equal spacings. The rubber also creates an excellent bond to prevent slippage of the antennae in the belt and minimize belt breakage, as during operation. This non-slipping condition is desired since antennae slippage either sideways or along the linear path during operation could cause a malfunction of the detection function.

Each antenna is preferably about 20 centimeters in length and extends substantially full width across the belt or at least a distance extending from probe to probe and sufficient to cover all lengths between cables where ripping is likely to occur. The probes are generally 15 centimeters in length to accommodate the preferred probes for installations in commercial use. Variations in these dimensions and ratios are acceptable as a function of the controlling programming involved.

## Claims

1. A flexible conveyor belt formed of an elastomeric material and having formed therein a plurality of rip detecting antennae spaced along the length of the belt with each antenna extending substantially from edge to edge across the width of the belt, characterized by each antenna being formed of flexible electrically conductive fabric constructed of yarns, said yarns being made up of strands twisted along their lengths, said strands being formed of an electrically non-conductive material continuously precoated with electrically conductive particles to thereby form a continuous, electrically conductive path substantially across the width of the belt at spaced apart locations for rip detecting capabilities, said yarns being coupled together in an open mesh configuration to form interstices therebetween, whereby the elastomeric material of said belt surround said yarns on both sides of said yarns and through the interstices therebetween to hold the fabric fixedly positioned in its open mesh configuration within said belt.

2. A flexible conveyor belt as set forth in claim 1 wherein said strands are formed of carbon suffused nylon.

3. The flexible conveyor belt as set forth in claim 2 wherein said yarns are coupled together a leno weave.

## Revendications

1. Bande convoyeuse flexible constituée d'un matériau élastomère et comportant à l'intérieur un ensemble d'antennes de détection de déchirure espacées le long de la bande, chaque antenne s'étendant essentiellement d'un bord à l'autre sur la largeur de la bande, caractérisée en ce que chaque antenne est constituée d'un tissu électroconducteur souple composé de fils, lesdits fils étant constitués de brins retordus sur leur longueur, lesdits brins étant formés dans un matériau non-électroconducteur prérecouvert d'une manière continue de particules électroconductrices pour constituer ainsi un chemin continu électroconducteur essentiellement sur la largeur de la bande à des emplacements espacés entre eux pour obtenir des moyens de détection de déchirure, lesdits fils étant reliés entre eux selon une configuration à mailles ajourées pour former des interstices entre ceux-ci, en permettant au matériau élastomère de la bande d'entourer ces fils des deux côtés de ceux-ci et à travers les interstices entre ces fils pour maintenir le tissu en position fixe dans sa configuration à mailles ajourées à l'intérieur de la bande.

2. Bande convoyeuse flexible selon la revendication 1, caractérisée en ce que lesdits brins sont constitués du polyamide appelé Nylon noyé dans du carbone.

3. Bande convoyeuse flexible selon la revendication 2, caractérisée en ce que lesdits fils sont reliés entre eux comme dans un tissage de toile à patron.

**Patentansprüche**

1. Flexibles Förderband, das aus einem elastomeren Material gebildet ist und in dem eine Vielzahl von Risse entdeckenden Antennen gebildet ist, die mit Abstand über die Länge des Bandes verteilt sind, wobei jede Antenne sich im wesentlichen von Rand zu Rand über die Breite des Bandes estreckt, dadurch gekennzeichnet, daß jede Antenne aus flexiblem, elektrisch leitfähigem Gewebe gebildet ist, das aus Garnen aufgebaut ist, die aus über ihre Längen verdrallten Strängen bestehen, die aus einem elektrisch nicht leitfähigen Material gebildet sind, das kontinuierlich mit elektrisch leitfähigen Teilchen vorbeschichtet ist, wodurch ein kontinuierlicher, elektrisch leitfähiger Weg im wesentlichen quer über die Breite des Bandes an mit Abstand zueinander liegenden Stellen zur Ausbildung der Risse entdeckenden Fähigkeiten gebildet wird, wobei die Garne in offenmaschiger oder netzartiger Gestalt unter Bildung von Zwischenräumen zwischen sich miteinander vereinigt sind, wodurch das elastomere Material des genannten Bandes die genannten Garne auf beiden Seiten der genannten Garne und durch die Zwischenräume zwischen ihnen umgibt, um das Gewebe in seiner offenmaschigen Gestalt innerhalb des Bandes fest in seiner Lage zu halten.

2. Flexibles Förderband nach Anspruch 1, worin die Stränge aus mit Kohlenstoff überzogenem Nylon gebildet sind.

3. Flexibles Förderband nach Anspruch 2, worin die genannten Garne in Leno-Bindung miteinander verbunden sind.

Fig.1

Fig.2

Fig.3

Fig.5

Fig.4